# EUROPEAN PATENT APPLICATION

(11) **EP 2 354 969 A1**
(43) Date of publication of application: **10.08.2011**
(21) Application number: 09306234.7
(22) Date of filing: 15.12.2009
(51) Int. Cl.: G06F 17/30

(54) **Methods and systems for determining extended metadata**

(71) Applicant: Alcatel Lucent, 75008 Paris (FR)
(72) Inventor: Lou, Zhe, 2000, Antwerpen (BE); Godon, Marc Bruno Frieda, 1840, Londerzeel (BE)
(74) Representative: D'Halleweyn, Nele Veerle Trees Gertrudis

(57) **Abstract**

A method is disclosed for determining user personalised extended metadata, for predetermined data, comprising
maintaining a user specific user database comprising user profile information;
extracting primary metadata parameters having associated primary metadata values from the predetermined data;
retrieving a at least one user specific rule for at least one of the primary metadata parameters;
determining user personalised extended metadata for the predetermined data by applying the at least one user specific rule on the associated primary metadata values using the user profile information; and corresponding systems.

## Description

### Technical field of the invention

The present invention relates to the field of methods and systems for determining user personalised extended metadata for predetermined data.

### Background of the invention

The appearance of digital cameras has promoted the usage of cameras during people's daily life. As a result, a large number of digital images is being captured, stored, manipulated, edited and shared using the digital cameras and other computing resources.

The management of such large amounts of data, and the assignment of meaningful metadata to it, is not evident.

Flickr™, Youtube™, . . . allow users to manually annotate metadata to pictures or videos but casual users are reluctant to put much effort on actively adding metadata.

Advanced digital cameras today provide the capability of auto-annotating a large amount of metadata (e.g. time, location, format, size and so on) to images. The auto-generated metadata is not always meaningful.

There exists a need for alternative methods and systems for determining user personalised extended metadata.

### Summary of the invention

According to a first aspect of the present invention a method is disclosed for determining user personalised extended metadata, for predetermined data, comprising maintaining a user specific user database comprising user profile information; extracting primary metadata parameters having associated primary metadata values from the predetermined data; retrieving at least one user specific rule for at least one of the primary metadata parameters; determining user personalised extended metadata for the predetermined data by applying the at least one user specific rule on the associated primary metadata values using the user profile information.

Primary metadata parameters can be for instance parameters relating to time and/or location of images which are automatically added by user device as e.g. cameras.

Primary metadata may also be extracted from an image by applying image recognition techniques. The recognition of an event or object can for instance indirectly be associated with a certain date/time and/or location.

The concept of metadata is known to the skilled person. In a certain view, it is "data about data".

For the purpose of the present description "extended metadata" relates to user personalized metadata. The extended metadata is preferably derived by calculations based on primary metadata (already existing metadata which can be automatically generated by a user device as for instance a camera, or by means of for instance image recognition techniques known in the art) and reference data. According to embodiments of the present invention the user personalised extended metadata is determined by using user profile information related to the at least one primary metadata parameter.

User profile information comprises user specific information. The user profile information may also comprise profile information of « friends » of the user. User profile information may comprise date/time information, location information, linked with description information.

According to embodiments of the present invention the user specific information database further comprises user specific media data, the user specific media data comprising media data metadata parameters having associated media data metadata values, and determining user personalised extended metadata for the predetermined data further comprises using the associated media data metadata values for media data metadata parameters corresponding to the at least one primary metadata parameter.

User specific media data comprises data (for instance) images, multimedia, etc.) associated to said user. The user specific media can be present in a personal data storage, over which the user has full or sufficient control.

According to embodiments of the present invention the at least one user specific rule comprises comparing information of the primary metadata parameter with the information comprised in the user profile information.

The comparison may for instance comprise the determination of a difference in parameter values for corresponding or related parameters. It may further comprise determining whether the difference is below a predetermined threshold value. The threshold value can be absolute or relative.

According to embodiments of the present invention at least one of the primary metadata parameters comprises date and/or time information.

According to embodiments of the present invention at least one user specific rule comprises comparing date and/or time information of the at least one primary metadata parameter with the date and time information of media data metadata parameters and media data metadata values of user specific media data.

The comparison may comprise determining the time difference (i.e. separation in time).

According to embodiments of the present invention at least one of the primary metadata parameters comprises location information.

According to embodiments of the present at least one user specific rule comprises comparing location information of the primary metadata parameter with location information comprised in the user profile information.

According to embodiments of the present invention at least one user specific rule comprises comparing location information of the at least one primary metadata parameter with location information of media data metadata parameters and media data metadata values of user specific media data. The comparison may comprise determining the difference in location (i.e. the separation in space).

According to embodiments of the present invention the method further comprises storing the user personalised extended meta data associated with the predetermined data, linked with the predetermined data.

By storing the user personalized extended metadata, it can be preserved for later use. Moreover, can the stored extended metadata be used in subsequent determinations of extended metadata for other predetermined data.

According to embodiments of the present invention the method further comprises outputting the user personalised extended meta data information associated with the predetermined data to a man-machine interface.

According to a second aspect of the present invention a system is disclosed for determining user personalised extended metadata for predetermined data, the system comprising:
- a storage means comprising a user specific information database comprising user profile information;
- an extracting means for extracting primary metadata parameters and associated primary metadata values from the predetermined data;
- a retrieving means for retrieving at least one user specific rule corresponding to at least one of the primary metadata parameters;
- a determining means for determining user personalised extended metadata for the predetermined data by applying the user specific rule on the associated primary metadata values using user profile information.

According to embodiments of the present invention the determination means is adapted or determining user personalised extended metadata by using user profile information related to the at least one primary metadata parameters.

According to embodiments of the present invention the user specific information database further comprises user specific media data, the user specific media data comprising media data metadata parameters and associated media data metadata values, and wherein the determining means is adapted for determining user personalised extended metadata for the predetermined data by using the associated media data metadata values for media data metadata parameters corresponding to the primary metadata parameters.

According to embodiments of the present invention the determining means comprises a means for outputting the user personalised extended meta data information associated with the predetermined data to a man-machine interface.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

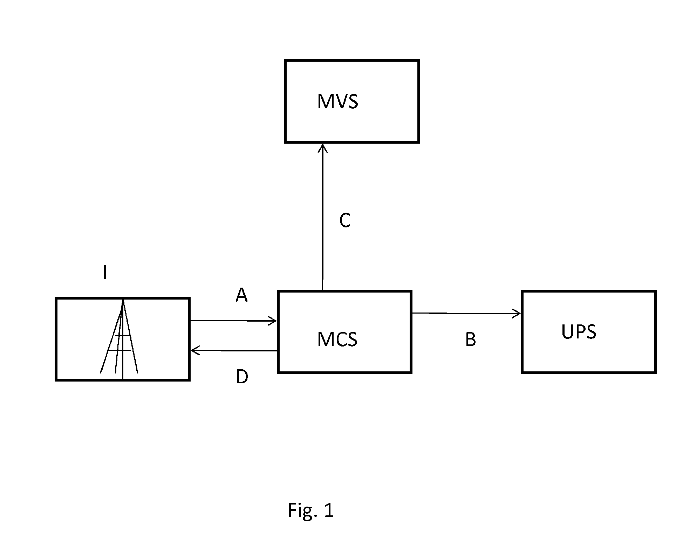

Fig. 1 provides an illustration of a flow according to aspects of the present invention.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

An illustration of the method according to aspects of the present invention is shown in Figure 1.

A system according to embodiments of the present invention can comprise the following functional blocks: a Media Vault Service (MVS), a Metadata Creation Service (MCS) and a User Profile Service (UPS).

Based on existing metadata of a picture/video possibly originating from various sources, e.g. directly from devices, or indirectly after image recognition, the Metadata Creation Service searches the User Profile Service to see if there is a matching in for instance location or time information. For instance, after searching the UPS, the MCS finds that a certain statue shown in an image is just 1km away from the house of one of the viewer's friends, or for instance, after searching the UPS, the MCS finds that a newborn baby, depicted in an image, has the same birthday as the viewer's father, etc.

The MCS can also consult the Media Vault Service to see if there is match. For instance, there can be a picture in the Media Vault that was taken by the viewer's son, showing the same statue.

The more meaningful metadata can be annotated to the pictures automatically, optionally (for instance based on predetermined filters), or semi-automatically (after user confirmation).

An architecture according to embodiments of the present invention is depicted in Fig. 1. The different functional blocks can comprise the following functionalities:
- Metadata Creation Service:
   a. Generating meaningful metadata
   b. Retrieving relevant metadata and associated message from the UPS
   c. Retrieving relevant media data from the MVS
   d. Storing annotated media data into the MVS
- User Profile Service for storing user profiles.
- Media Vault Service for storing annotated media.

The services mentioned above can be implemented as either network services or local applications, and can then be mapped on a variety of physical network architectures, as will be recognized by the skilled person.

The functionalities of the functional blocks described can also be mapped in different, alternative functional blocks as will be recognized by the skilled person.

A first example scenario can be as follows:
one receives a holiday photo via email from a friend. When one opens the photo, the system (e.g. MCS) extracts all metadata (A), e.g. location, attached to this photo. The MCS queries the UPS (B) for a set of rules related to location (e.g. "within 100 meters") and then sends the fetched rules and the location the MVS (C). A match is found in the MVS based on the location metadata and the rules. It shows that one visited a place close by the place where the friend's photograph was taken, last year in autumn. Extended metadata, e.g. a message, e.g. "you have been close by last year in autumn", is tagged to the photo by the MCS (D). The message flow is shown in Figure 1.

The following scenarios can be performed with a similar message flow.

A second example scenario can be for instance:
one is browsing the photos of one of his friend's newborn babies. After a similar flow as described for the first example scenario, one can be notified that his son's birthday is in the same month.

A third example scenario can be for instance:
one browses a sunny photo of a monument in Paris. After a similar flow as described for the first example scenario, a popup message is shown to the user showing that that Paris summer of 1959 was as hot as this summer.

The thus generated metadata has added value to viewers.

This disclosure presents a system with services that can provide autonomous or semi-autonomous meaningful metadata annotation.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While the principles of the invention have been set out above in connection with specific embodiments, it is to be clearly understood that this description is merely made by way of example and not as a limitation of the scope of protection which is determined by the appended claims.

## Claims

1. A method for determining user personalised extended metadata, for predetermined data, comprising
maintaining a user specific user database comprising user profile information;
extracting primary metadata parameters having associated primary metadata values from said predetermined data;
retrieving at least one user specific rule for at least one of said primary metadata parameters;
determining user personalised extended metadata for said predetermined data by applying said at least one user specific rule on said associated primary metadata values using said user profile information.

2. Method according to claim 1, wherein said user personalised extended metadata is determined by using user profile information related to said at least one primary metadata parameter.

3. Method according to claim 1 or 2, wherein said user specific information database further comprises user specific media data, said user specific media data comprising media data metadata parameters having associated media data metadata values, and wherein determining user personalised extended metadata for said predetermined data further comprises using said associated media data metadata values for media data metadata parameters corresponding to said at least one primary metadata parameter.

4. Method according to any of the claims 1 to 3, wherein at least one of said primary metadata parameters comprises date and/or time information.

5. Method according to claim 4, wherein said at least one user specific rule comprises comparing date and/or time information of said primary metadata parameter with said date and time information comprised in said user profile information.

6. Method according to claim 4 to 5, wherein said at least one user specific rule comprises comparing date and/or time information of said at least one primary metadata parameter with said date and time information of media data metadata parameters and media data metadata values of user specific media data.

7. Method according to any of the previous claims, wherein at least one of said primary metadata parameters comprises location information.

8. Method according to claim 7, wherein at least one user specific rule comprises comparing location information of said primary metadata parameter with location information comprised in said user profile information.

9. Method according to claim 7 to 8, wherein at least one user specific rule comprises comparing location information of said at least one primary metadata parameter with location information of media data metadata parameters and media data metadata values of user specific media data.

10. Method according to any of the previous claims, further comprising storing said user personalised extended meta data associated with said predetermined data, linked with said predetermined data.

11. Method according to any of the previous claims, further comprising outputting said user personalised extended meta data information associated with said predetermined data to a man-machine interface.

12. A system for determining user personalised extended metadata for predetermined data, said system comprising:
a storage means comprising a user specific information database comprising user profile information;
an extracting means for extracting primary metadata parameters and associated primary metadata values from said predetermined data;
a retrieving means for retrieving at least one user specific rule corresponding to at least one of said primary metadata parameters;
a determining means for determining user personalised extended metadata for said predetermined data by applying said user specific rule on said associated primary metadata values using user profile information.

13. System according to claim 12, wherein said determination means is adapted or determining user personalised extended metadata by using user profile information related to said at least one primary metadata parameters.

14. System according to claim 12 or 13, wherein said user specific information database further comprises user specific media data, said user specific media data comprising media data metadata parameters and associated media data metadata values, and wherein said determining means is adapted for determining user personalised extended metadata for said predetermined data by using said associated media data metadata values for media data metadata parameters corresponding to said primary metadata parameters.

15. System according to any of claims 12 to 14, wherein said determining means comprises a means for outputting said user personalised extended meta data information associated with said predetermined data to a man-machine interface.
